# EUROPÄISCHE PATENTSCHRIFT

(11) **EP 4 105 699 B1**
(45) Veröffentlichungstag und Bekanntmachung des Hinweises auf die Patenterteilung: **28.01.2026**
(21) Anmeldenummer: 22178794.8
(22) Anmeldetag: 14.06.2022
(51) Int. Cl.: G02B 6/44

(54) **DOSENEINSATZ FÜR EINE INSTALLATIONSDOSE**
SOCKET INSERT FOR AN INSTALLATION SOCKET
INSERT DE BOÎTE POUR UNE BOÎTE D'INSTALLATION

(30) Priorität: 17.06.2021 DE 102021115742
(43) Veröffentlichungstag der Anmeldung: 21.12.2022
(73) Patentinhaber: Kaiser GmbH & Co. KG, 58579 Schalksmühle (DE)
(72) Erfinder: VIOLA, Marc, 58339 Breckerfeld (DE); MAROWSKY, Michel, 58509 Lüdenscheid (DE)
(74) Vertreter: Rentsch Partner AG

(56) Entgegenhaltungen:
- EP-A1- 2 068 185
- EP-A2- 2 241 917
- CN-U- 201 984 193
- DE-B3- 102019 130 031
- FR-A1- 2 979 438
- US-A- 4 874 904
- US-B2- 9 020 321

## Beschreibung

Die vorliegende Erfindung betrifft einen Doseneinsatz für einen Glasfaserteilnehmeranschluss, insbesondere zum Einbau in eine Installationsdose.

Aus dem Stand der Technik sind verschiedene Doseneinsätze für Glasfaserteilnehmeranschlüsse bekannt. Während manche Glasfaserverteilerdosen nachträglich auf die Wand (Überputz) aufgesetzt werden, zielen die Doseneinsätze darauf ab in dafür vorgesehene Stellen in der Wand (Unterputz) verbaut zu werden. Der grundsätzliche Einbau ist hierbei dem Einbau einer elektrischen Steckdose nicht unähnlich. Im Gegensatz zu elektrischen Leitungen ist die Installation von den empfindlichen Glasfaserleitungen jedoch aufwendiger, da diese z.B. nicht problemlos verlängert werden oder bestimmte Biegeradien nicht unterschritten werden können. Eine zu kurze Glasfaserleitung muss daher in der Regel ersetzt und neu verlegt werden.

Doseneinsätze für die Installation eines Glasfaserteilnehmeranschlusses sind aus dem Stand der Technik bekannt. Moderne Ausgestaltungen weisen hierbei in der Regel eine Aufnahme für eine gewisse Reservelänge der Glasfaserleitungen auf. Aufgrund der eingeschränkten Biegefähigkeit der Glasfaserleitungen weisen entsprechende Doseneinsätze oftmals eine Art Aufnahme auf, auf welcher die Reservelänge der Glasfaserleitungen aufgewickelt und gelagert werden können. Um derartige Doseneinsätze vor Dreck und Staub zu schützen, können diese bereichsweise in einer abgedichteten Installationsdose angeordnet werden. Eine derartige Anordnung ist aus der DE102019130031B3 bekannt, welche am 25.03.2021 in Namen der Technetix BV veröffentlicht wurde und eine Anschlussdose zeigt, die eine Aussendose und eine Innendose umfasst. An oder auf der Innendose können hierbei die Glasfaserleitungen aufgewickelt werden. Um die Ausrichtung der Anschlussdose relativ zur Aufnahme der Glasfaserleitungen anzupassen, können die Aussendose und die Innendose in verschiedenen Winkelstellungen miteinander in Eingriff gebracht werden. Eine derartige Anordnung ist ebenfalls aus EP 2 241 917 A2 und US 4 874 904 A bekannt.

Die aus dem Stand der Technik bekannten Doseneinsätze sind in der Regel aufwendig zu installieren, da die biegeempfindlichen Glasfaserleitungen nur schwer auf beschränktem Einbauraum in der Wand montierbar sind. Die aufwendige Montage geht dabei oftmals einher mit aufwendig ausgestalteten und somit verhältnismässig teuren Doseneinsätzen.

Eine Aufgabe der Erfindung besteht darin einen Doseneinsatz für einen Glasfaserteilnehmeranschluss, insbesondere zum Einbau in eine Installationsdose, bereitzustellen, welcher eine effiziente Montage ermöglicht. Eine weitere Aufgabe der Erfindung besteht darin einen einfach aufgebauten und kostengünstigen Doseneinsatz bereitzustellen.

Die der Erfindung zugrunde liegende Aufgabe wird gelöst durch den Gegenstand der unabhängigen Ansprüche.

Die Erfindung bezieht sich auf einen Doseneinsatz für einen Glasfaserteilnehmeranschluss, insbesondere zum Einbau in eine Installationsdose. Der Doseneinsatz gemäss der Erfindung unterscheidet sich vom Stand der Technik u.a. durch einen einfachen Aufbau. Ein solcher Doseneinsatz umfasst eine Tragplatte zur Befestigung des Doseneinsatzes an der Installationsdose, eine von einer Rückseite der Tragplatte in eine axiale Richtung abragende Trommel zum Aufwickeln mindestens einer Glasfaserleitung um die Trommel und einer Kupplungsvorrichtung zur Aufnahme und stirnseitigen Wirkverbindung zweier optischer Verbinder miteinander. Die Kupplungsvorrichtung ist in einem montierten Zustand des Doseneinsatzes in einer durch die Tragplatte erstreckenden Aufnahmeöffnung eingesetzt. Die Trommel ist wiederum mit der Tragplatte und/oder der Kupplungsvorrichtung in mindestens einer Umfangsposition wirkverbindbar, insbesondere lösbar wirkverbindbar. Die axiale Richtung erstreckt sich also im wirkverbundenen Zustand der Trommel an der Tragplatte und/oder der Kupplungsvorrichtung in Richtung einer Mittelachse der Trommel.

Für einen einfachen Aufbau und eine kosteneffiziente Herstellung des Doseneinsatzes ist es von Vorteil, wenn die Tragplatte dünnwandig und/oder im Wesentlichen zweidimensional ausgestaltet ist. Eine zweidimensionale Ausgestaltung ist hierbei derart zu verstehen, dass die Tragplatte in eine Raumrichtung (hier die axiale Richtung) im Wesentlichen den gleichen Querschnitt aufweist. Beispielsweise kann die Tragplatte aus Blech geformt und gestanzt sein. Die Aufnahmeöffnung der Tragplatte dient zur Aufnahme der Kupplungsvorrichtung und kann mittig in der Tragplatte angeordnet sein. Weiterhin kann die Tragplatte aus der axialen Richtung betrachtet im Wesentlichen rechteckig sein und vier Ecken aufweisen. Für eine flexible Anwendung können die Ecken jeweils über eine Sollbruchstelle abtrennbar sein. Je nach Ausgestaltung und Form der Dünnstellen kann die verbleibende Tragplatte somit andere Konturen erlangen. Auf diese Weise kann die Tragplatte je nach Anwendung in ihrer Grösse angepasst werden, sodass diese beispielsweise nicht hinter einer später über dieser montierten Abdeckung sichtbar ist. Zur Befestigung der Tragplatte an der Installationsdose kann diese zudem mehrere Befestigungsöffnungen aufweisen (z.B. in Form einer ersten Gruppe an Befestigungsöffnungen). Es können so beispielsweise Schrauben durch die Befestigungsöffnungen in die Installationsdose geschraubt werden. Ergänzend kann ebenfalls eine weitere zweite Gruppe an Befestigungsöffnungen auf demjenigen Bereich der Tagplatte angeordnet sein, welcher über Sollbruchstellen abtrennbar ist.

Mit Vorteil umfasst die Kupplungsvorrichtung eine Kupplung und eine Halterung zum Halten der Kupplung. Die Kupplung und die Halterung können separat voneinander ausgestaltet sein (zwei separate Bauteile) oder sie können integral (einteilig) die Kupplungsvorrichtung ausformen. Die Kupplung dient zur Wirkverbindung und Aufnahme mindestens zwei optischer Verbinder (ein Paar optische Verbinder). Jedoch kann die Kupplung auch zur Wirkverbindung von mehreren Paaren, z.B. zwei oder drei Paaren, von optischen Verbindern dienen. Mit Vorteil handelt es sich bei der Kupplung um eine Standardkupplung zur Wirkverbindung von LC- und/oder SC- Verbindern. Die Halterung dient zum Halten der Kupplung und/oder zum Befestigen der Kupplungsvorrichtung an der Tragplatte. Die Halterung umfasst (bei einer separaten Ausgestaltung der Halterung) einen Aufnahmeraum für die Kupplung. Der Aufnahmeraum, respektive die darin im montierten Zustand angeordnete Kupplung, erstreckt sich mit Vorteil im montierten Zustand platzsparend durch die Aufnahmeöffnung der Tragplatte. In einer bevorzugten Ausführungsform umfasst die Kupplungsvorrichtung, insbesondere die Halterung der Kupplungsvorrichtung, eine Anlagefläche zur Anlage an der Tragplatte. Die Anlagefläche liegt im montierten Zustand mit Vorteil an der Rückseite der Tragplatte an. Somit ist die Kupplungsvorrichtung also von der Rückseite der Tragplatte an dieser montierbar. Hierzu kann die Kupplungsvorrichtung, insbesondere die Halterung, bereichsweise durch die Aufnahmeöffnung gesteckt werden. Zur Befestigung kann diese weiterhin Rasthaken umfassen, mittels denen die Kupplungsvorrichtung an der Tragplatte, insbesondere im Bereich der Aufnahmeöffnung, verrastet. Beispielsweise können die Rasthaken von der Rückseite der Tragplatte durch die Aufnahmeöffnung geführt werden und vorderseitig hinter dieser verrasten.

Mit Vorteil ist ein Kupplungsbereich der Kupplungsvorrichtung, insbesondere der Kupplung, im montierten Zustand in axialer Richtung in Bezug zur Tragplatte rückseitig von dieser angeordnet. Der Kupplungsbereich ist hierbei derjenige Bereich, in welchem die mindestens zwei optischen Verbinder stirnseitig aneinander anliegen. Diese Anordnung ermöglicht einen besonders flachen Aufbau des Doseneinsatzes. Ebenfalls vorteilhaft ist es hierzu, wenn eine Aufnahmerichtung, in welche die Kupplung in den Aufnahmeraum gesteckt wird, winkelig zu der axialen Richtung angeordnet ist. Mir Vorteil ist die Aufnahmerichtung zwischen 15 - 30° (Grad) zu der axialen Richtung geneigt. Für eine einfache Montage der Kupplung ist diese bevorzugt von der Vorderseite der Tragplatte in die an dieser montierten Halterung in den Aufnahmeraum einsteckbar.

Die Trommel erstreckt sich von einem vorderseitigen Ende zu einem rückseitigen Ende und ist mit Vorteil röhrenförmig. Je nach Anwendung kann die Trommel ebenfalls einen in die axiale Richtung erstreckenden Schlitz durch die Trommel aufweisen. Das vorderseitige Ende ist hierbei dasjenige Ende, welches im montierten Zustand zur Tragplatte hingewandt ist. Wie beschrieben, kann die Trommel je nach Ausgestaltung an der Tragplatte und/oder an der Kupplungsvorrichtung in mindestens einer Umfangsposition (z.B. lösbar) wirkverbindbar sein. Dies ist besonders vorteilhaft in Hinblick auf die aus der Gebäudewand austretenden Glasfaserleitungen, welche in der Regel eine gewisse Reservelänge aufweisen. Um Beschädigungen an der Leitung oder Störungen der Signalübertragung zu vermeiden, kann diese Reservelänge der Glasfaserleitungen auf die Trommel gewickelt und dort sorgsam verwahrt werden. Eine lösbar wirkverbindbare Trommel ermöglicht hierbei eine einfache Handhabung beim Aufwickeln der Reservelänge.

Für eine passgenaue Aufwicklung der Reservelänge und gemäss einer Ausführung der Erfindung ist die Trommel in mehreren voneinander unterschiedlichen Umfangspositionen mit der Tragplatte und/oder der Kupplungsvorrichtung wirkverbindbar.

Hierzu kann der Doseneinsatz Wirkverbindungsmittel zur Wirkverbindung der Trommel mit der Kupplungsvorrichtung (insbesondere der Halterung) und/oder der Trommel mit der Tragplatte umfassen. Ein besonders einfacher Aufbau des Doseneinsatzes kann jedoch erzielt werden, wenn die Trommel mit der Halterung der Kupplungsvorrichtung wirkverbindbar ist. Dies erlaubt eine flexible und voneinander unabhängige Montage der einzelnen Bestandteile des Doseneinsatzes.

Gemäss einer Ausführung der Erfindung ist die Trommel in einem wirkverbundenen Zustand in Bezug zur Tragplatte und/oder der Kupplungsvorrichtung um die Mittelachse der Trommel drehbar um die Handhabung weiter zu vereinfachen. Auf diese Art und Weise kann die Reservelänge durch Drehen der Trommel um die Mittelachse besonders einfach aufgewickelt werden. Dies kann realisiert werden, indem das Wirkverbindungsmittel die Trommel in axialer Richtung in Bezug zur Kupplungsvorrichtung bzw. zur Tragplatte fixiert, jedoch eine Drehung der Trommel um die Mittelachse zulässt. Die Wirkverbindungsmittel bilden hierzu vorzugsweise einen Hinterschnitt zwischen der Trommel und der Kupplungsvorrichtung (insbesondere der Halterung) und/oder zwischen der Trommel und der Tragplatte in die axiale Richtung aus. Die Wirkverbindungsmittel umfassen mit Vorteil mindestens eine zumindest bereichsweise umlaufende Schulter mit welcher mindestens ein Wirkverbindungselement (z.B. ein Rastelement, ein Führungspin, ein Haken oder ähnliches) den Hinterschnitt ausbildet. Beispielsweise kann die Trommel an einer Innenseite oder einer Aussenseite der Trommel eine umlaufende Schulter aufweisen, hinter welcher zur Bildung des Hinterschnitts entsprechende Rastelemente der Kupplungsvorrichtung (insbesondere der Halterung) eingreifen.

Damit die Trommel nach dem Aufwickeln der Reservelänge der Glasfaserleitung(en) nicht aufgrund der Spannung der Wicklung zurückdreht, ist es vorteilhaft, wenn die Trommel in dem wirkverbundenen Zustand in Bezug zur Tragplatte und/oder der Kupplungsvorrichtung je in mehreren zueinander verdrehten (mit Vorzug diskreten) Umfangspositionen positionierbar ist. Die Positionierstruktur wirkt hierzu im wirkverbundenen Zustand mit mindestens einem Positionierelement zusammen um die Trommel in einer entsprechenden Umfangsposition zu positionieren. Die Positionierstruktur kann an der Trommel angeordnet sein, während das mindestens eine Positionierelement an der Kupplungsvorrichtung (insbesondere der Halterung) oder der Tragplatte angeordnet ist. Ebenfalls denkbar sind jedoch auch Lösungen, wo die Positionierstruktur an der Kupplungsvorrichtung oder der Tragplatte angeordnet ist, während das mindestens eine Positionierelement an der Trommel angeordnet ist. Vorzugsweise ist die Positionierstruktur jedoch an dem vorderseitigen Ende der Trommel angeordnet. Die Positionierstruktur kann an der Innenseite oder der Aussenseite der Trommel angeordnet sein. Mit Vorteil ist die Positionierstruktur jedoch an der Innenseite zwischen dem vorderseitigen Ende der Trommel und der oben erwähnten umlaufenden Schulter angeordnet. Die diskreten Umfangspositionen, in welchen die Trommel je positionierbar ist, sind mit Vorteil gleichmässig um den Umfang der Trommel verteilt angeordnet. Mit Vorteil sind die jeweiligen diskreten Umfangsposition in 4 - 10° (grad) Winkelschritten, insbesondere in 6° (grad) Winkelschritten in Bezug auf die Mittelachse zueinander versetzt angeordnet.

Die Positionierstruktur kann mehrere um die Trommel zueinander benachbarte und/oder zueinander beabstandete Formausschnitte umfassen. Für eine feine Abstufung ist es vorteilhaft, wenn die Formausschnitte umlaufend ineinander übergehen. Beispielsweise kann umlaufend alle 4 - 10° (grad), insbesondere alle 6° (grad) in Bezug zur Mittelachse ein Formausschnitt angeordnet sein. Die Formausschnitte können z.B. eine Dreiecks-, Trapezform oder eine Kreisabschnittsform aufweisen. Das mindestens eine Positionierelement ist mit Vorzug radial nach innen oder nach aussen (elastisch) deformierbar. Beispielsweise kann dieses ein sich in die axiale Richtung erstreckender Dorn sein, welcher in einem wirkverbundenen Zustand der Trommel an der Kupplungsvorrichtung in einen Formausschnitt eingreift. Ohne Deformation des jeweiligen mindestens einen Positionierelementes (respektive des Dorns) bildet sich so in Umfangsrichtung ein Hinterschnitt zwischen dem jeweiligen Positionierelement und der Positionierstruktur (respektive dem entsprechenden Formausschnitt) aus. Hierzu kann das mindestens eine Positionierelement an einem distalen Ende des Positionierelementes eine zu dem Formausschnitt korrespondierende Form aufweisen. An einem proximalen Ende kann das mindestens eine Positionierelement rückseitig an der Kupplungsvorrichtung oder an der Rückseite der Tragplatte angeformt sein. Bei einer Drehung der Trommel deformiert sich das jeweilige Positionierelement um das proximale Ende und rutscht so von einem Formausschnitt in den Nächsten. Wird kein Moment zur Drehung auf die Trommel aufgebracht, verweilt das mindestens eine Positionierelement (vorzugsweise in einem nicht deformierten Zustand) in dem entsprechenden Formausschnitt und fixiert die Trommel so in der jeweiligen diskreten Umfangsposition. Für eine gute Positionierung bietet es sich an mehrere Positionierelemente vorzusehen. Diese können in einer diskreten Umfangsposition jeweils in einen entsprechenden Formausschnitt eingreifen.

Unabhängig von der Ausgestaltung der Wirkverbindung kann an der Aussenseite der Trommel mindestens ein Führungskanal zur Führung von mindestens einer auf die Trommel aufgewickelten Glasfaserleitung angeordnet sein um ein Abrutschen der Glasfaserleitungen von der Trommel zu erschweren. Mit Vorteil umfasst die Trommel jedoch zwei in axialer Richtung nebeneinander angeordnete Führungskanäle. Der mindestens eine Führungskanal kann als umlaufende Vertiefung in einer Aussenseite der Trommel ausgebildet sein oder von mindestens einem von der Aussenseite der Trommel abstehenden Begrenzungselement gebildet werden. Beispielsweise können ein oder mehrere Begrenzungselemente einen zumindest bereichsweise um die Trommel umlaufenden Kragen ausbilden. So kann z.B. ein Führungskanal zwischen der Tragplatte und einem Kragen der Trommel angeordnet sein. Mit Vorteil umfasst die Trommel drei bereichsweise um die Trommel umlaufende Kragen. Einen ersten Kragen am vorderseitigen Ende, einen zweiten Kragen am rückseitigen Ende und einen dazwischen angeordneten Kragen, welcher die zwei nebeneinander angeordneten Führungskanäle voneinander abtrennt.

Alternativ oder ergänzend kann die Trommel mindestens ein Fixierungselement z.B. in der Form eines Bügels aufweisen, welches dazu dient ein Herausrutschen einer Glasfaserleitung aus einem Führungskanal zu erschweren / verhindern. Mindestens ein Fixierungselement, respektive mindestens ein Bügel, kann sich bereichsweise über einen Führungskanal erstrecken und diesen lokal radial nach aussen entlang des Bügels begrenzen. Je nach Ausgestaltung kann das jeweilige Fixierungselement von einem Begrenzungselement in die axiale Richtung abstehen und sich bereichsweise über dem Führungskanal erstecken. Für ein zusätzliches Fixieren der Glasfaserleitungen kann die Trommel, insbesondere im Bereich des mindestens einen Führungskanals, ebenfalls mehrere um den Umfang verteilt angeordnete Öffnungen zum Durchführen von Kabelbindern aufweisen, mittels denen die Glasfaserleitungen fixiert werden können.

Je nach Montage können die Glasfaserleitungen lokal einen Spleissschutz benötigen. Um diesen Aspekt zu adressieren kann die Trommel mindestens eine Aufnahme für einen Spleissschutz einer Glasfaserleitung umfassen. Die mindestens eine Aufnahme kann hierbei Klemmmittel umfassen, welche den Spleissschutz klemmend befestigt. Die mindestens eine Aufnahme ist vorzugsweise an einem rückseitigen Ende der Trommel angeordnet. In der jeweiligen Aufnahme kann der Speissschutz vor der Montage gelagert werden, sodass dieser während der Montage für einen Monteur einfach zugänglich erreichbar ist. Alternativ oder ergänzend kann in einem montierten Zustand der Glasfaseranschlüsse eine Glasfaserleitung mit einem daran befestigten Spleissschutz in der Aufnahme gelagert werden.

Die vorliegende Erfindung bezieht sich ebenfalls auf einen Doseneinsatz mit einer Installationsdose, welche zur bereichsweisen Aufnahme des Doseneinsatzes dient. Die Installationsdose kann eine Unterputzdose sein. Die Tragplatte kann hierzu Befestigungsöffnungen aufweisen durch welche Befestigungselemente, wie Schrauben, Einsätze oder ähnliches geführt werden und in der Installationsdose form- und/oder kraftschlüssig befestigt werden. Der Durchmesser der Trommel ist mit Vorteil im Bereich von 40 - 54 mm. Ein derartiger Durchmesserbereich ist vorteilhaft für eine einfache Montage in einer Installationsdose, wie sie beispielsweise auch für Steckdosen oder ähnliches verwendet wird.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Ausführungsform eines erfindungsgemässen Doseneinsatzes in einer perspektivischen Ansicht;
- Fig. 2: Der Doseneinsatz gemäss Figur 1 in einer geschnittenen Ansicht;
- Fig. 3: Der Doseneinsatz gemäss Figur 1 in einer rückseitigen Ansicht;
- Fig. 4: Der Doseneinsatz gemäss Figur 1 auseinandergebaut in einer perspektivischen Ansicht;
- Fig. 5: Zwei erfindungsgemässe Varianten der Trommel des Doseneinsatzes in einer perspektivischen Ansicht.

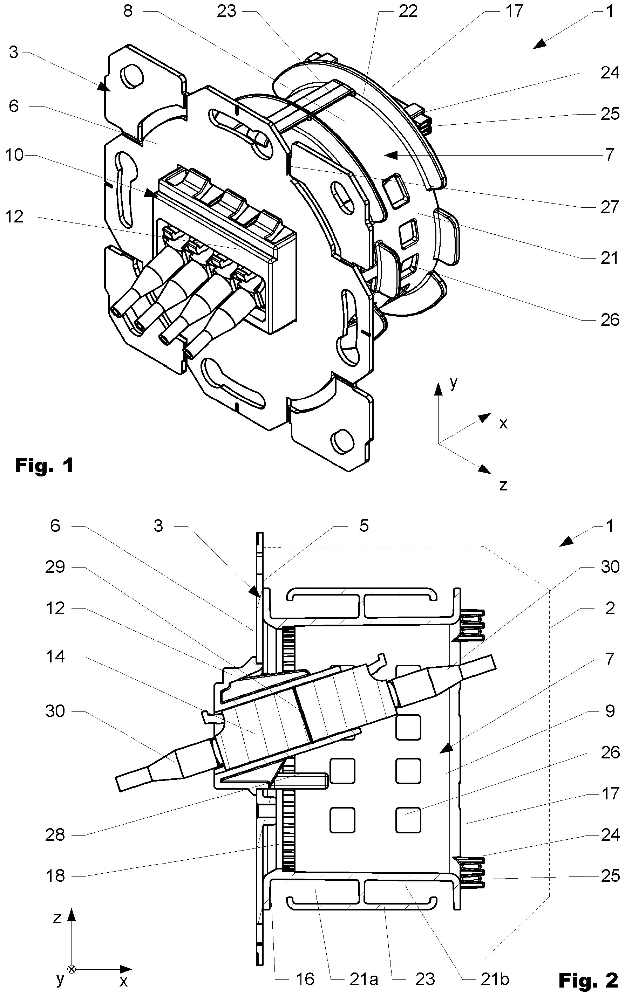

**Figur 1** - **Figur 4** zeigt eine erste Ausführungsform eines erfindungsgemässen Doseneinsatzes 1 umfassend eine Tragplatte 3, eine von einer Rückseite 5 der Tragplatte 3 in eine axiale Richtung (x-Richtung) abstehende Trommel 7 zum Aufwickeln mindestens einer Glasfaserleitung um die Trommel 7 und einer mit der Tragplatte 3 wirkverbundene Kupplungsvorrichtung 10 zur Aufnahme und Wirkverbindung zweier optischer Verbinder 30 für eine Glasfaserleitung. Die Kupplungsvorrichtung 10 umfasst eine Kupplung 14 und eine Halterung 12 für die Kupplung 14. Die Kupplungsvorrichtung 10 kann integral, respektive einteilig ausgestaltet sein. Eine mehrteilige Aufteilung (wie hier gezeigt) hat jedoch den Vorteil, dass eine Standardkupplung 14 zur Aufnahme und Wirkverbindung zweier optischer Verbinder 30 verwendet werden kann.

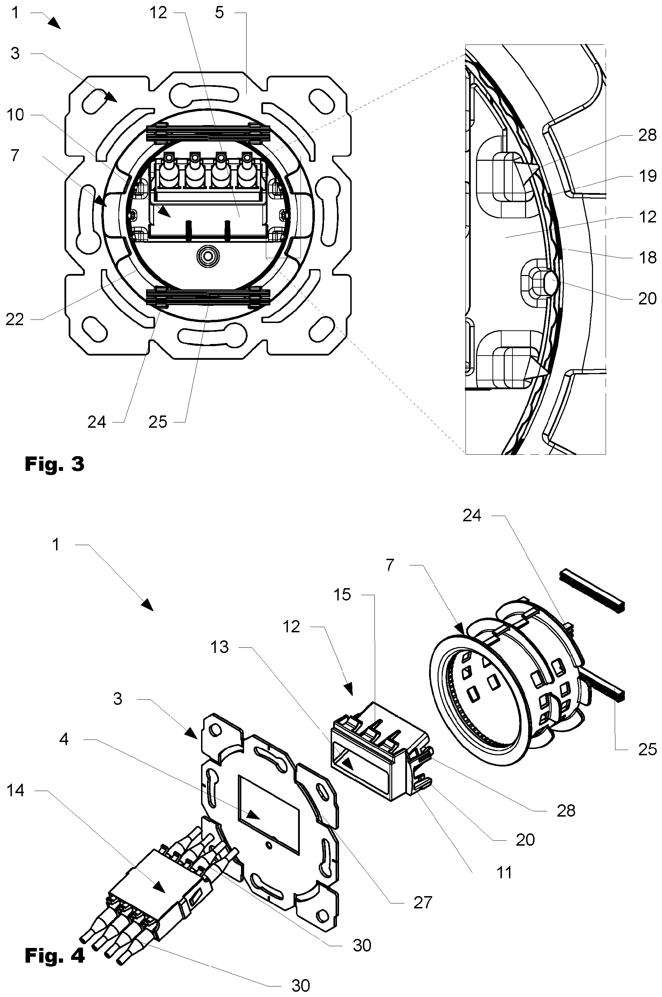

Zur Montage des Doseneinsatzes 1 kann die Halterung 12 rückseitig in eine Aufnahmeöffnung 4 der Tragplatte 3 gesteckt werden bis diese mit einer Anlagefläche 11 an der Rückseite 5 der Tragplatte 3 anliegt (siehe **Figur 4**). Elastisch deformierbare Rasthaken 15, welche rückseitig durch die Aufnahmeöffnung 4 geschoben werden, verrasten die Halterung 12 in der Aufnahmeöffnung 4, wenn diese mit der Anlagefläche 11 an der Rückseite 5 anliegt. Die Kupplung 14 kann unabhängig davon vorher oder nachher vorderseitig (aus Richtung der Vorderseite 6 der Tragplatte 3) in die Halterung 12 eingeschoben und mit dieser (z.B. ebenfalls rastend) wirkverbunden werden.

Für die Wirkverbindung von der Kupplungsvorrichtung 10 mit der Trommel 7 weist der Doseneinsatz 1 ein Wirkverbindungsmittel 19, 28 auf, welches im wirkverbundenen Zustand einen Hinterschnitt in die axiale Richtung zwischen der Trommel 7 und der Kupplungsvorrichtung 10 ausbildet. Im gezeigten Fall umfasst die Halterung 12 hierzu Rastelemente 28, welche hinter einer umlaufenden Schulter 19 der Trommel 7 verrasten. In diesem wirkverbundenen Zustand ist die Trommel 7 in axialer Richtung fixiert, jedoch mit Vorteil noch um ihre Mittelachse verdrehbar. Dies ist gut erkennbar in dem Detailausschnitt aus **Figur 3****.** Um die Trommel 7 in einer jeweiligen verdrehten Umfangsposition zu positionieren und ein ungewolltes Drehen der Trommel 7 zu verhindern, kann diese weiter eine Positionierstruktur 18 umfassen. Im gezeigten Fall umfasst die Positionierstruktur 18 entlang der Innenseite der Trommel 7 umlaufende und zueinander benachbarte Formausschnitte mit einer Kreisabschnittsform. Auch andere Formen sind denkbar. Passend zu den kreisabschnittsförmigen Formausschnitten kann die Kupplungsvorrichtung 10 rückseitig Positionierelemente, hier in Form von zwei sich in die axiale Richtung erstreckenden und sich gegenüberliegenden Dornen 20, aufweisen. Die Dorne 20 sind im gezeigten Fall je zwischen zwei Rastelementen 28 rückseitig an der Halterung 12 angeformt. Wie in **Figur 3** ersichtlich, stützen sich die Dorne 20 in einer diskreten Umfangsposition je radial nach aussen in dem kreisabschnittsförmigen Formausschnitt 18 ab. Bei einer Drehung der Trommel 7 deformieren sich die Dorne 20 radial nach innen und rutschen so durch das aufgebrachte Moment von einem Formausschnitt in den Nächsten. Wird kein Moment auf die Trommel 7 aufgebracht, wird eine weitere Verdrehung verhindert, da die Kraft, welche benötigt wird um einen Dorn 20 von einem Formausschnitt 18 in den Nächsten zu bewegen (respektive um die Dorne zu deformieren), i.d.R. nicht von alleine überwunden wird. Die Dorne 20 verweilen so in dem entsprechenden Formausschnitt 18 und fixieren die Trommel 7 in der jeweiligen diskreten Umfangsposition. Da die Formausschnitte direkt ineinander übergehen, sind die jeweiligen diskreten Umfangspositionen feinstufig in 4 - 10° Winkelschritten zueinander versetzt angeordnet.

In **Figur 2** ist ein Schnitt durch den Doseneinsatz 1 gezeigt. Hier sieht man den besonders flachen Aufbau des Einsatzes sowie den Einbau in eine schematisch angedeutete Installationsdose 2. Der flache Aufbau wird einerseits durch die dünnwandige, zweidimensionale Tragplatte 3 erreicht. Ferner spielt es eine Rolle, dass die Kupplungsvorrichtung 10 durch die Aufnahmeöffnung 4 der Tragplatte 3 ragt und in dieser angeordnet ist. Der Aufnahmeraum 13 der Halterung 12 für die Kupplung 14 erstreckt sich somit ebenfalls durch die Aufnahmeöffnung 4. In dem gezeigten montierten Zustand ist ein Kupplungsbereich 29 der Kupplung, an welchem die mindestens zwei optischen Verbinder 30 stirnseitig aneinander anliegen, in axialer Richtung rückseitig der Tragplatte 3 und innerhalb der Trommel 7 angeordnet. Die Tragplatte 3 kann je nach Ausgestaltung ergänzend Sollbruchstellen 27 aufweisen, mittels denen die Kontur der Tragplatte, z.B. je nach Form der Installationsdose 2, angepasst werden kann.

In **Figur 2** sind die um die Trommel umlaufenden Führungskanäle 21 gut ersichtlich, welche von den Begrenzungselementen 22 begrenzt werden. Im gezeigten Fall umfasst die Trommel 7 zwei Führungskanäle 21a, 21b, welche seitlich (in axialer Richtung) jeweils durch die Begrenzungselemente 22 voneinander begrenzt werden. Ebenfalls sichtbar sind die Fixierungselemente 23, welche seitlich von den Begrenzungselementen 22 abragen und welche das Herausrutschen der aufgewickelten Glasfaserleitungen von der Trommel 7 möglichst verhindern sollen. Am rückseitigen Ende 17 der Trommel 7 sind mehrere Aufnahmen 24 für jeweils einen Spleissschutz 25 angeordnet. Die jeweiligen Aufnahmen 24 sind hierbei an die Trommel 7 angeformt und halten die Spleissschutze 25 klemmend.

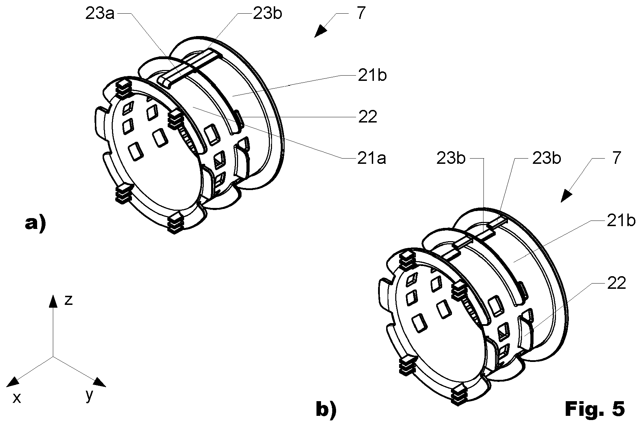

**Figur 5a)** und **Figur 5b****)** zeigen zwei erfindungsgemässe Varianten der Trommel 7 des Doseneinsatzes 1 von der Rückseite. Die Trommel 7 der **Figur 5a****)** entspricht hierbei der Trommel der Ausführungsform gemäss **Figuren 1** - **4****.** Diese dort gezeigte Ausführungsform kann jedoch ebenfalls mit einer Trommel der **Figur 5b****)** versehen werden. Bei beiden dargestellten Trommeln 7 sind die angeformten Aufnahmen 24 für die Spleissschutze 25 gut zu erkennen. Beide Trommeln 7 weisen zwei umlaufende Führungskanäle 21a, 21b auf, welche von entsprechenden Begrenzungselementen 22 voneinander abgegrenzt werden. Die Begrenzungselemente 22 sind als drei zumindest bereichsweise um die Trommel umlaufende und von der Aussenseite 8 der Trommel 7 abstehende Krägen ausgestaltet. Die drei Krägen begrenzen die zwei Führungskanäle 21a, 21b jeweils in die axiale Richtung. Die beiden Trommeln 7 unterscheiden sich voneinander in der Ausgestaltung der Fixierungselemente 23. In **Figur 5a****)** steht von einem Begrenzungselement 22, welches zwischen dem ersten und dem zweiten Führungskanal 21 angeordnet ist, jeweils ein Fixierungselement 23a, 23b in die axiale Richtung ab und erstreckt sich über mehr als 80% einer Breite des Führungskanals 21a, 21b. In **Figur 5b****)** stehen jeweils zwei Fixierungselemente paarweise gegenüberliegend voneinander von einem jeweiligen Begrenzungselement 22 ab. Die beiden Fixierungselemente 23b, 23b überlappen sich in die axiale Richtung, sodass diese gemeinsam den entsprechenden Führungskanal überdecken und diesen radial nach aussen begrenzen. In den Führungskanälen 21 können ergänzend mehrere um den Umfang verteilt angeordnete Öffnungen 26 zum Durchführen von Kabelbindern aufweisen, mittels denen die Glasfaserleitungen fixiert werden können.

### LISTE DER BEZUGSZEICHEN

| | | | |
|---|---|---|---|
| 1 | Doseneinsatz | 17 | Rückseitiges Ende |
| 2 | Installationsdose | 18 | Positionierstruktur, Formausschnitte |
| 3 | Tragplatte | | |
| 4 | Aufnahmeöffnung | 19 | Schulter |
| 5 | Rückseite | 20 | Dorn |
| 6 | Vorderseite | 21 | Führungskanal |
| 7 | Trommel | 22 | Begrenzungselement |
| 8 | Aussenseite | 23 | Fixierungselemente |
| 9 | Innenseite | 24 | Aufnahme |
| 10 | Kupplungsvorrichtung | 25 | Spleisschutz |
| 11 | Anlagefläche | 26 | Öffnung (Trommel) |
| 12 | Halterung | 27 | Sollbruchstelle |
| 13 | Aufnahmeraum | 28 | Rastelemente |
| 14 | Kupplung | 29 | Kupplungsbereich |
| 15 | Rasthaken | 30 | Optische Verbinder |
| 16 | Vorderseitiges Ende | | |

## Patentansprüche

1. Doseneinsatz (1) für einen Glasfaserteilnehmeranschluss zum Einbau in eine Installationsdose (2), umfassend
a. eine Tragplatte (3) zur Befestigung des Doseneinsatzes (1) an der Installationsdose (2) mit einer sich durch die Tragplatte (3) erstreckenden Aufnahmeöffnung (4) zur Aufnahme einer Kupplungsvorrichtung (10);
b. die Kupplungsvorrichtung (10), welche in einem montierten Zustand in die Aufnahmeöffnung (4) eingesetzt ist und zur Aufnahme und stirnseitigen Wirkverbindung zweier optischer Verbinder (30) miteinander dient; und
c. eine von einer Rückseite (5) der Tragplatte (3) in eine axiale Richtung abragende Trommel (7) zum Aufwickeln mindestens einer Glasfaserleitung um die Trommel (7), welche an der Tragplatte (3) und/oder der Kupplungsvorrichtung (10) in mindestens einer Umfangsposition wirkverbindbar ist, **dadurch gekennzeichnet, dass**
d. die Trommel (7) in dem wirkverbundenen Zustand in Bezug zur Tragplatte (3) und/oder der Kupplungsvorrichtung (10) um eine Mittelachse der Trommel (7) drehbar ist.

2. Doseneinsatz (1) gemäss Patentanspruch 1, **dadurch gekennzeichnet, dass** ein Kupplungsbereich (29) der Kupplungsvorrichtung (10) im montierten Zustand in axialer Richtung rückseitig der Tragplatte (3) angeordnet ist.

3. Doseneinsatz (1) gemäss einem der vorangehenden Patentansprüche, **dadurch gekennzeichnet, dass** die Kupplungsvorrichtung (10) eine Anlagefläche (11) umfasst, welche im montierten Zustand an der Tragplatte (3), insbesondere an der Rückseite (5) der Tragplatte (3), anliegt.

4. Doseneinsatz (1) gemäss einem der vorangehenden Patentansprüche, **dadurch gekennzeichnet, dass** die Kupplungsvorrichtung (10) Rasthaken (15) umfasst um die Kupplungsvorrichtung (10) im Bereich der Aufnahmeöffnung (4) zu verrasten.

5. Doseneinsatz (1) gemäss einem der vorangehenden Patentansprüche, **dadurch gekennzeichnet, dass** die Kupplungsvorrichtung (10) eine Halterung (12) zum Halten einer Kupplung (14), insbesondere eine Standardkupplung, zur Aufnahme und Wirkverbindung der zwei optischen Verbinder (30) umfasst.

6. Doseneinsatz (1) gemäss Patentanspruch 5, **dadurch gekennzeichnet, dass** die Halterung (12) einen Aufnahmeraum (13) für die Kupplung (14) umfasst, welcher sich im montierten Zustand des Doseneinsatzes (1) durch die Aufnahmeöffnung (4) der Tragplatte (3) erstreckt.

7. Doseneinsatz (1) gemäss Patentanspruch 6, **dadurch gekennzeichnet, dass** der Aufnahmeraum (13) derart ausgestaltet ist, dass die Kupplung (14) vorderseitig in den Aufnahmeraum (13) einsteckbar ist.

8. Doseneinsatz (1) gemäss einem der vorangehenden Patentansprüche, **dadurch gekennzeichnet, dass** die Kupplungsvorrichtung (10) mit der Trommel (7) und/oder die Tragplatte (3) mit der Trommel (7) in einem wirkverbundenen Zustand einen Hinterschnitt in die axiale Richtung ausbildet.

9. Doseneinsatz (1) gemäss einem der vorangehenden Patentansprüche, **dadurch gekennzeichnet, dass** die Trommel (7) in dem wirkverbundenen Zustand in Bezug zur Tragplatte (3) und/oder der Kupplungsvorrichtung (10) in mehreren Umfangspositionen, insbesondere diskreten Umfangspositionen, positionierbar ist.

10. Doseneinsatz (1) gemäss Patentanspruch 9, **dadurch gekennzeichnet, dass** die mehreren diskreten Umfangspositionen in 4 - 10° Winkelschritten zueinander verdreht angeordnet sind.

11. Doseneinsatz (1) gemäss Patentanspruch 9 oder 10, **dadurch gekennzeichnet, dass** die Trommel (7) an einem zu der Tragplatte (3) hingewandten vorderseitigen Ende (16) eine Positionierstruktur (18) zur Positionierung der drehbaren Trommel (7) in den jeweiligen Umfangspositionen aufweist.

12. Doseneinsatz (1) gemäss Patentanspruch 11, **dadurch gekennzeichnet, dass** die Positionierstruktur (18) um die Innenseite (9) der Trommel (7) umlaufend zueinander benachbarte und/oder zueinander beabstandete Formausschnitte umfasst.

13. Doseneinsatz (1) gemäss Patentanspruch 12, **dadurch gekennzeichnet, dass** die Kupplungsvorrichtung (10) und/oder die Tragplatte (3) rückseitig mindestens ein radial deformierbares Positionierelement (20) aufweist, welches in einem wirkverbundenen Zustand der Trommel (7) und in einer diskreten Umfangsposition in den Formausschnitt eingreift.

14. Doseneinsatz (1) gemäss Patentanspruch 13, **dadurch gekennzeichnet, dass** das mindestens eine Positionierelement (20) ein in die axiale Richtung erstreckender Dorn ist, welcher derart ausgelegt ist, dass sich dieser bei einer Drehung der Trommel (7) um ein proximales Ende des Dorns deformiert um von einem Formausschnitt in den Nächsten zu gelangen.

15. Doseneinsatz (1) gemäss einem der vorangehenden Patentansprüche, **dadurch gekennzeichnet, dass** an der Aussenseite (8) der Trommel (7) mindestens ein Führungskanal (21), vorzugsweise zwei Führungskanäle (21), zur Führung von je mindestens einer Glasfaserleitung ausbildet ist.

16. Doseneinsatz (1) gemäss einem Patentanspruch 15, **dadurch gekennzeichnet, dass** die Trommel (7) mindestens ein Fixierungselement (23) aufweist um ein Herausrutschen einer Glasfaserleitung aus dem mindestens einen Führungskanal (21) zu erschweren.

17. Doseneinsatz (1) gemäss einem der vorangehenden Patentansprüche, **dadurch gekennzeichnet, dass** die Trommel (7) an einem rückseitigen Ende (17) mindestens eine Aufnahme (24) für einen Spleissschutz (25) aufweist.

18. Doseneinsatz (1) für einen Glasfaserteilnehmeranschluss zum Einbau in eine Installationsdose (2), umfassend
a. eine Tragplatte (3) zur Befestigung des Doseneinsatzes (1) an der Installationsdose (2) mit einer sich durch die Tragplatte (3) erstreckenden Aufnahmeöffnung (4) zur Aufnahme einer Kupplungsvorrichtung (10);
b. die Kupplungsvorrichtung (10), welche in einem montierten Zustand in die Aufnahmeöffnung (4) eingesetzt ist und zur Aufnahme und stirnseitigen Wirkverbindung zweier optischer Verbinder (30) miteinander dient; und
c. eine von einer Rückseite (5) der Tragplatte (3) in eine axiale Richtung abragende Trommel (7) zum Aufwickeln mindestens einer Glasfaserleitung um die Trommel (7), **dadurch gekennzeichnet, dass** die Trommel an der Tragplatte (3) und/oder der Kupplungsvorrichtung (10) in mehreren Umfangspositionen wirkverbindbar ist

19. Doseneinsatz (1) gemäss einem der vorangehenden Patentansprüche mit einer Installationsdose (2) zur bereichsweisen Aufnahme des Doseneinsatzes (1).

## Claims

1. Box insert (1) for a fiber optic subscriber connection for installation in an installation box (2), comprising
a. a support plate (3) for attaching the box insert (1) to the installation box (2), with a receiving opening (4) extending through the support plate (3) for receiving a coupling device (10);
b. the coupling device (10), which is inserted into the receiving opening (4) in an assembled state and is used for receiving and end-side interconnection of two optical connectors (30) to each other; and
c. a drum (7) protruding in an axial direction from a rear side (5) of the support plate (3) for winding at least one fiber optic line around the drum (7), which is interconnectable with the support plate (3) and/or the coupling device (10) in at least one circumferential position, **characterized in that**
d. the drum (7) is rotatable in the interconnected state relative to the support plate (3) and/or the coupling device (10) about a center axis of the drum (7).

2. Box insert (1) according to claim 1, **characterized in that** a coupling region (29) of the coupling device (10) in the assembled state is arranged in the axial direction behind the support plate (3).

3. Box insert (1) according to one of the preceding patent claims, **characterized in that** the coupling device (10) comprises a bearing surface (11) which, in the assembled state, bears against the support plate (3), in particular against the rear side (5) of the support plate (3).

4. Box insert (1) according to one of the preceding patent claims, **characterized in that** the coupling device (10) comprises latching hooks (15) for latching the coupling device (10) in the region of the receiving opening (4).

5. Box insert (1) according to one of the preceding patent claims, **characterized in that** the coupling device (10) comprises a holder (12) for holding a coupling (14), in particular a standard coupling, for receiving and interconnection of the two optical connectors (30).

6. Box insert (1) according to patent claim 5, **characterized in that** the holder (12) comprises a receiving space (13) for the coupling (14), which in the assembled state of the box insert (1) extends through the receiving opening (4) of the support plate (3).

7. Box insert (1) according to patent claim 6, **characterized in that** the receiving space (13) is designed such that the coupling (14) is insertable from the front into the receiving space (13).

8. Box insert (1) according to one of the preceding patent claims, **characterized in that** the coupling device (10) with the drum (7) and/or the support plate (3) with the drum (7), in an interconnected state, forms an undercut in the axial direction.

9. Box insert (1) according to one of the preceding patent claims, **characterized in that** the drum (7) in the interconnected state is positionable relative to the support plate (3) and/or the coupling device (10) in a plurality of circumferential positions, in particular discrete circumferential positions.

10. Box insert (1) according to claim 9, **characterized in that** the plurality of discrete circumferential positions are arranged rotated relative to one another in 4-10° angular increments.

11. Box insert (1) according to patent claim 9 or 10, **characterized in that** the drum (7) has a positioning structure (18) at a front end (16) facing the support plate (3) for positioning the rotatable drum (7) in the respective circumferential positions.

12. Box insert (1) according to claim 11, **characterized in that** the positioning structure (18) comprises shape cutouts that are adjacent to one another and/or spaced apart from one another around the inner side (9) of the drum (7).

13. Box insert (1) according to claim 12, **characterized in that** the coupling device (10) and/or the support plate (3) has at the rear at least one radially deformable positioning element (20), which engages in the shape cutout in an interconnected state of the drum (7) and in a discrete circumferential position.

14. Box insert (1) according to patent claim 13, **characterized in that** the at least one positioning element (20) is a mandrel extending in the axial direction, which is designed such that it deforms around a proximal end of the mandrel upon rotation of the drum (7) in order to move from one shape cutout to the next.

15. Box insert (1) according to one of the preceding patent claims, **characterized in that** at least one guide channel (21), preferably two guide channels (21), is designed on the outer side (8) of the drum (7) for guiding at least one fiber optic line each.

16. Box insert (1) according to patent claim 15, **characterized in that** the drum (7) has at least one fixing element (23) to impede a fiber optic line to slip out of the at least one guide channel (21).

17. Box insert (1) according to one of the preceding patent claims, **characterized in that** the drum (7) at a rear end (17) has at least one receptacle (24) for a splice protector (25).

18. Box insert (1) for a fiber optic subscriber connection for installation in an installation box (2), comprising
a. a support plate (3) for attaching the box insert (1) to the installation box (2) with a receiving opening (4) extending through the support plate (3) for receiving a coupling device (10);
b. the coupling device (10), which is inserted into the receiving opening (4) in an assembled state and is used for receiving and end-side interconnection of two optical connectors (30) to each other; and
c. a drum (7) protruding in an axial direction from a rear side (5) of the support plate (3) for winding at least one fiber optic line around the drum (7), **characterized in that** the drum is interconnectable with the support plate (3) and/or the coupling device (10) in a plurality of circumferential positions.

19. Box insert (1) according to one of the preceding patent claims with an installation box (2) for receiving the box insert (1) at least in some regions.

## Revendications

1. Insert de boîte (1) pour un raccordement d'abonné à fibre optique destiné à monter dans une boîte d'installation (2), comprenant
a. une plaque de support (3) pour la fixation de l'insert de boîte (1) à la boîte d'installation (2) avec une ouverture de réception (4) s'étendant à travers la plaque de support (3) pour recevoir un dispositif d'accouplement (10) ;
b. le dispositif d'accouplement (10) qui, à l'état monté, est inséré dans l'ouverture de réception (4) et sert à recevoir et à établir une interconnexion frontale de deux connecteurs optiques (30) entre eux ; et
c. un tambour (7) dépassant dans une direction axiale d'une face arrière (5) de la plaque de support (3) pour enrouler au moins une ligne de fibres optiques autour du tambour (7), lequel est interconnectable à la plaque de support (3) et/ou au dispositif d'accouplement (10) dans au moins une position circonférentielle, **caractérisé en ce que**
d. le tambour (7) est rotatif dans l'état interconnecté par rapport à la plaque de support (3) et/ou au dispositif d'accouplement (10) autour d'un axe central du tambour (7).

2. Insert de boîte (1) selon la revendication 1, **caractérisé en ce qu'**une zone d'accouplement (29) du dispositif d'accouplement (10) est disposée, à l'état monté, derrière la plaque de support (3) dans la direction axiale.

3. Insert de boîte (1) selon l'une des revendications précédentes, **caractérisé en ce que** le dispositif d'accouplement (10) comprend une surface d'appui (11) qui, à l'état monté, appuie contre la plaque de support (3), en particulier contre la face arrière (5) de la plaque de support (3).

4. Insert de boîte (1) selon l'une des revendications précédentes, **caractérisé en ce que** le dispositif d'accouplement (10) comprend des crochets d'encliquetage (15) pour encliqueter le dispositif d'accouplement (10) dans la zone de l'ouverture de réception (4).

5. Insert de boîte (1) selon l'une des revendications précédentes, **caractérisé en ce que** le dispositif d'accouplement (10) comprend un support (12) pour supporter un accouplement (14), en particulier un accouplement standard, pour recevoir et interconnexion les deux connecteurs optiques (30).

6. Insert de boîte (1) selon la revendication 5, **caractérisé en ce que** le support (12) comprend un espace de réception (13) pour l'accouplement (14), qui s'étend à travers l'ouverture de réception (4) de la plaque de support (3) lorsque l'insert de boîte (1) est monté.

7. Insert de boîte (1) selon la revendication 6, **caractérisé en ce que** l'espace de réception (13) est conçu de telle sorte que l'accouplement (14) est insérable à l'avant dans l'espace de réception (13).

8. Insert de boîte (1) selon l'une des revendications précédentes, **caractérisé en ce que** le dispositif d'accouplement (10) avec le tambour (7) et/ou la plaque de support (3) avec le tambour (7) forme, dans un état interconnecté, une contre-dépouille dans la direction axiale.

9. Insert de boîte (1) selon l'une des revendications précédentes, **caractérisé en ce que** le tambour (7) dans l'état interconnecté est positionnable par rapport à la plaque de support (3) et/ou au dispositif d'accouplement (10) dans plusieurs positions circonférentielles, en particulier des positions circonférentielles discrètes.

10. Insert de boîte (1) selon la revendication 9, **caractérisé en ce que** les multiples positions circonférentielles discrètes sont disposées de manière à être tournées les unes par rapport aux autres par pas angulaires de 4 à 10°.

11. Insert de boîte (1) selon la revendication 9 ou 10, **caractérisé en ce que** le tambour (7) présente, à une extrémité avant (16) tournée vers la plaque de support (3), une structure de positionnement (18) pour positionner le tambour rotatif (7) dans les positions circonférentielles respectives.

12. Insert de boîte (1) selon la revendication 11, **caractérisé en ce que** la structure de positionnement (18) comprend des découpes de forme adjacentes et/ou espacées les unes des autres autour de la face intérieure (9) du tambour (7).

13. Insert de boîte (1) selon la revendication 12, **caractérisé en ce que** le dispositif d'accouplement (10) et/ou la plaque de support (3) derrière présente au moins un élément de positionnement (20) déformable radialement qui, dans un état d'accouplement interconnecté du tambour (7) et dans une position circonférentielle discrète, s'engage dans la découpe de forme.

14. Insert de boîte (1) selon la revendication 13, **caractérisé en ce que** le au moins un élément de positionnement (20) est un mandrin s'étendant dans la direction axiale, qui sont conçues de telle sorte que, lors d'une rotation du tambour (7), il se déforme autour d'une extrémité proximale du mandrin afin de passer d'une découpe de forme à la suivante.

15. Insert de boîte (1) selon l'une des revendications précédentes, **caractérisé en ce que** au moins un canal de guidage (21), préférablement deux canaux de guidage (21), est formé sur la face extérieure (8) du tambour (7) pour guider chacune au moins une ligne à fibre optique.

16. Insert de boîte (1) selon la revendication 15, **caractérisé en ce que** le tambour (7) comporte au moins un élément de fixation (23) afin d'empêcher une ligne à fibre optique de glisser hors du au moins un canal de guidage (21).

17. Insert de boîte (1) selon l'une des revendications précédentes, **caractérisé en ce que** le tambour (7) présente, à une extrémité arrière (17), au moins un logement (24) pour une protection d'épissure (25).

18. Insert de boîte (1) pour un raccordement d'abonné à fibre optique destiné à monter dans une boîte d'installation (2), comprenant
a. une plaque de support (3) pour la fixation de l'insert de boîte (1) à la boîte d'installation (2) avec une ouverture de réception (4) s'étendant à travers la plaque de support (3) pour recevoir un dispositif d'accouplement (10) ;
b. le dispositif d'accouplement (10) qui, à l'état monté, est inséré dans l'ouverture de réception (4) et sert à recevoir et à établir une interconnexion de deux connecteurs optiques (30) entre eux ; et
c. un tambour (7) dépassant dans une direction axiale d'une face arrière (5) de la plaque de support (3) pour enrouler au moins une ligne à fibres optiques autour du tambour (7), **caractérisé en ce que** le tambour est interconnectable à la plaque de support (3) et/ou au dispositif d'accouplement (10) dans plusieurs positions circonférentielles.

19. Insert de boîte (1) selon l'une des revendications précédentes, avec une boîte d'installation (2) pour recevoir l'insert de boîte (1) dans certaines zones.
